# EUROPÄISCHE PATENTANMELDUNG

(11) **EP 4 468 098 A1**
(43) Veröffentlichungstag der Anmeldung: **27.11.2024**
(21) Anmeldenummer: 24177292.0
(22) Anmeldetag: 22.05.2024
(51) Int. Cl.: G05B 19/4099, B25J 9/16, B24B 19/26

(54) **VERFAHREN ZUR OBERFLÄCHENBEARBEITUNG VON WERKSTÜCKEN MIT EINEM OBERFLÄCHENBEARBEITUNGSWERKZEUG**

(30) Priorität: 22.05.2023 DE 102023113307
(71) Anmelder: Deutsches Zentrum für Luft- und Raumfahrt e.V., 53227 Bonn (DE)
(72) Erfinder: Schneyer, Stefan, 86169 Augsburg (DE); Nottensteiner, Korbinian, 82234 Oberpfaffenhofen-Weßling (DE)
(74) Vertreter: dompatent von Kreisler Selting Werner - Partnerschaft von Patent- und Rechtsanwälten mbB

(57) **Zusammenfassung**

Verfahren zur automatisierten Oberflächenbearbeitung von Werkstücken (1) mit einem Oberflächenbearbeitungswerkzeug (3) mit den folgenden Schritten:
a) Analysieren zumindest einer zu bearbeitenden Oberfläche (5) eines Werkstücks (1)
b) Erstellung eines Oberflächenrasters zumindest der zu bearbeitenden Oberfläche (5), wobei das Oberflächenraster Rasterpunkte aufweist,
c) Bestimmen von jeweils einem Kontaktpunkt des Oberflächenbearbeitungswerkzeugs (3) für ausgewählte Rasterpunkte oder jeden Rasterpunkt, wobei die Kontaktpunkte des Oberflächenbearbeitungswerkzeugs (3) zumindest Mittelkontakt und Randkontakt des Oberflächenbearbeitungswerkzeugs (3) umfassen,
d) Einteilen der zu bearbeitenden Oberfläche (5) in Segmente (7), die benachbarte Rasterpunkt mit dem gleichen Kontaktpunkt des Oberflächenbearbeitungswerkzeugs (3) beinhalten,
e) Planen von Bearbeitungspfaden (9) des Oberflächenbearbeitungswerkzeugs (3) in einem Segment (7), und
f) Bearbeiten der Oberfläche des Segments (7) durch Führen des Oberflächenbearbeitungswerkzeugs (3) entlang der Bearbeitungspfade (9), wobei ein Kontakt des Oberflächenbearbeitungswerkzeugs (3) mit der zu bearbeitenden Oberfläche (5) mit dem dem Segment zugeordneten Kontaktpunkt des Oberflächenbearbeitungswerkzeugs (3) erfolgt.

## Beschreibung

Die vorliegende Erfindung betrifft ein Verfahren zur Oberflächenbearbeitung von Werkstücken mit einem Oberflächenbearbeitungswerkzeug.

Bei der Automatisierung von Oberflächenbearbeitungsaufgaben ist es bereits bekannt, eine Oberfläche eines zu bearbeitenden Werkstücks durch Verwendung von Normalenvektoren der Oberflächenpunkte der Werkstückoberfläche zu analysieren und möglichst flache Abschnitte aufzufinden, die auf einfache Art und Weise bearbeitet werden können.

Für die automatisierte Bearbeitung einer Oberfläche gibt es darüber hinaus Ansätze, Bearbeitungspfade entlang vordefinierter Muster zu planen.

Bei der Planung von einer automatisierten Oberflächenbearbeitung wird jedoch zur Vereinfachung ein konstanter Kontaktpunkt des Oberflächenbearbeitungswerkzeugs mit dem Werkstück angenommen, zumeist ein Werkzeugmittelpunkt.

Aufgrund dieser Vereinfachung ist jedoch insbesondere die Bearbeitung von Freiformgeometrien und konkaven Fläche schwierig oder überhaupt nicht möglich.

Häufig werden parallele Bearbeitungsbahnen angewandt, wodurch es zu ungewollten Überlappungen oder unbearbeiteten Lücken an der Werkstoffoberfläche kommen kann.

Bei den zuvor beschriebenen Ansätzen handelt es sich um allgemeine Kenntnisse des Anmelders, die sich nicht auf einen konkreten Stand der Technik beziehen.

Es ist daher die Aufgabe der vorliegenden Erfindung, ein verbessertes automatisiertes Oberflächenbearbeitungsverfahren für Freiformgeometrien zu schaffen.

Die Erfindung ist definiert durch das Verfahren gemäß Anspruch 1.

Das erfindungsgemäße Verfahren zur automatisierten Oberflächenbearbeitung von Werkstücken mit einem Oberflächenbearbeitungswerkzeug sieht folgende Schritte vor:
a) Analysieren zumindest einer zu bearbeitenden Oberfläche eines Werkstücks,
b) Erstellung eines Oberflächenrasters zumindest der zu bearbeitenden Oberfläche, wobei das Oberflächenraster Rasterpunkte aufweist,
c) Bestimmen von jeweils einem Kontaktpunkt des Oberflächenbearbeitungswerkzeugs für ausgewählte Rasterpunkte oder jeden Rasterpunkt, wobei die Kontaktpunkte des Oberflächenbearbeitungswerkzeugs zumindest Mittelkontakt und Randkontakt des Oberflächenbearbeitungswerkzeugs umfassen,
d) Einteilen der zu bearbeitenden Oberfläche in Segmente, die benachbarte Rasterpunkt mit dem gleichen Kontaktpunkt des Oberflächenbearbeitungswerkzeugs beinhalten,
e) Planen von Bearbeitungspfaden des Oberflächenbearbeitungswerkzeugs in einem Segment, und
f) Bearbeiten der Oberfläche des Segments durch Führen des Oberflächenbearbeitungswerkzeugs entlang der Bearbeitungspfade, wobei ein Kontakt des Oberflächenbearbeitungswerkzeugs mit der zu bearbeitenden Oberfläche mit dem dem Segment zugeordneten Kontaktpunkt des Oberflächenbearbeitungswerkzeugs erfolgt.

Das erfindungsgemäße Verfahren sieht somit vor, dass durch eine Analyse der Oberfläche des Werkstücks ein Rasternetz gebildet wird und für ausgewählte oder jeden Rasterpunkt festgelegt wird, mit welchem Kontaktpunkt des Oberflächenbearbeitungswerkzeugs ein Kontakt zwischen Oberflächenbearbeitungswerkzeug und Oberfläche des Werkstücks erfolgen soll. Dabei wird zumindest zwischen einem Mittelkontakt des Oberflächenbearbeitungswerkzeugs und einem Randkontakt des Oberflächenbearbeitungswerkzeugs unterschieden. Ein Mittelkontakt ist dabei ein Kontakt der Mitte einer Bearbeitungsfläche des Oberflächenbearbeitungswerkzeugs mit der Oberfläche des Werkstücks und ein Randkontakt ein Kontakt mit dem Rand bzw. der Kante der Bearbeitungsfläche des Oberflächenbearbeitungswerkzeugs mit der Oberfläche des Werkstücks. Dadurch ist eine flexible Bearbeitung einer Oberfläche des Werkstücks möglich, da insbesondere durch die Verwendung von Kontaktpunkten mit Randkontakt des Oberflächenbearbeitungswerkzeugs konkave Flächen in vorteilhafter Weise bearbeitet werden können.

Die zu bearbeitende Oberfläche wird ferner in Segmente eingeteilt, die benachbarte Rasterpunkte mit dem gleichen Kontaktpunkt des Oberflächenbearbeitungswerkzeugs beinhalten. Ein Segment enthält somit ausschließlich Kontaktpunkte der gleichen Art, sodass bei einer späteren Bearbeitung des Segments kein Wechsel des Kontaktpunkts zwischen Oberflächenbearbeitungswerkzeug und Oberfläche des Werkstücks erfolgen muss, wodurch eine vorteilhafte Bearbeitung der Oberfläche des Werkstücks erfolgen kann und eine gleichmäßige Oberflächenbearbeitung erreicht werden kann.

Anschließend werden Bearbeitungspfade des Oberflächenbearbeitungswerkzeugs in einem Segment geplant und das Oberflächenbearbeitungswerkzeug entlang der Bearbeitungspfade geführt, um die Oberfläche des Segments zu bearbeiten. Dabei erfolgt der Kontakt des Oberflächenbearbeitungswerkzeugs mit der zu bearbeitenden Oberfläche mit dem dem Segment zugeordneten Kontaktpunkt des Oberflächenbearbeitungswerkzeugs.

Das erfindungsgemäße Verfahren ermöglicht somit eine flexible Bearbeitung von Freiformgeometrien eines Werkstücks, wobei durch die Unterscheidung zwischen unterschiedlichen Kontaktpunkten des Oberflächenbearbeitungswerkzeugs mit der Oberfläche des Werkstücks unterschiedliche Krümmungen der Werkstückoberfläche, wie beispielsweise auch konkave Oberflächenbereiche, in vorteilhafter Weise bearbeitet werden können. Durch das Vorsehen von Segmenten der Werkstückoberfläche, in dem eine Bearbeitung mit dem gleichen Kontaktpunkt des Oberflächenbearbeitungswerkzeugs erfolgt, ist darüber hinaus eine vorteilhafte Bearbeitung der Oberfläche möglich, wobei Änderungen des Kontaktpunkts und somit dadurch entstehenden Einflüsse auf die Oberfläche des Werkstücks vermieden werden.

Unter Kontaktpunkt des Oberflächenbearbeitungswerkzeugs wird im Rahmen der Erfindung ein berechneter Punkt verstanden, der den Kontakt zwischen Oberflächenbearbeitungswerkzeug und Werkstück repräsentiert. Ein tatsächlicher Kontakt zwischen Oberflächenbearbeitungswerkzeug und Oberfläche erfolgt dann als Fläche, die den Kontaktpunkt enthält.

Das Oberflächenbearbeitungswerkzeug kann beispielsweise ein Schleifwerkzeug, Polierwerkzeug oder ein anderes Werkzeug, bei dem mittels einer Oberfläche eine Oberfläche des Werkstücks behandelt bzw. bearbeitet wird, sein.

Vorzugsweise ist vorgesehen, dass in Schritt a) eine zweidimensionale Oberflächenparametrisierung zumindest der zu bearbeitenden Oberfläche erfolgt und in Schritt b) das Oberflächenraster anhand der zweidimensionalen Oberflächenparametrisierung erfolgt.

Das erfindungsgemäße Verfahren kann somit vorsehen, dass die dreidimensionale Oberfläche des Werkstücks parametrisiert wird, also als Parameterdarstellung vorliegt, sodass das Oberflächenraster zweidimensional erstellt wird. Dadurch ist das erfindungsgemäße Verfahren in besonders vorteilhafter Weise und mit geringem Rechenaufwand ausführbar, wobei insbesondere die Planung der Bearbeitungspfade vereinfacht ist.

In Schritt e) können dabei die Bearbeitungspfade in dem Segment anhand der zweidimensionalen Oberflächenparametrisierung geplant werden und für die Bearbeitung der Oberfläche in Schritt f) die Bearbeitungspfade in dreidimensionale Positionen und Orientierungen des Oberflächenbearbeitungswerkzeugs umgerechnet werden. Mit anderen Worten kann das erfindungsgemäße Verfahren vorsehen, dass die dreidimensionale Oberfläche des Werkstücks zunächst durch Parametrisierung zweidimensional dargestellt wird, anhand der zweidimensionalen Darstellung die Festlegung der Kontaktpunkte, die Einteilung der Segmente und die Planung der Bearbeitungspfade erfolgt und anschließend die Bearbeitungspfade in dreidimensionale Positionen und Orientierung des Oberflächenbearbeitungswerkzeugs umgesetzt werden.

Das Oberflächenbearbeitungswerkzeug kann beispielsweise robotergestützt geführt werden.

Vorzugsweise ist vorgesehen, dass in Schritt e) für jedes in Schritt d) erstellt Segment Bearbeitungspfade des Oberflächenbearbeitungswerkzeugs geplant werden und in Schritt f) die Oberflächen jedes Segments durch Abfahren der Bearbeitungspfade mit dem Oberflächenbearbeitungswerkzeug bearbeitet werden. Jedes Segment wird dabei mit dem entsprechend zugeordneten Kontaktpunkt des Oberflächenbearbeitungswerkzeugs bearbeitet. Grundsätzlich besteht auch die Möglichkeit, dass zwischen der Bearbeitung von Segmenten ein Werkzeugwechsel erfolgt, sodass unterschiedliche Segmente mit unterschiedlichen Oberflächenbearbeitungswerkzeugen, beispielsweise mit Oberflächenbearbeitungswerkzeugen unterschiedlicher Größe, bearbeitet werden.

In einer bevorzugten Ausführungsform der Erfindung ist vorgesehen, dass in Schritt c) bei der Bestimmung von Rasterpunkten als Kontaktpunkt mit Randkontakt des Oberflächenbearbeitungswerkzeugs zusätzlich eine Orientierung des Oberflächenbearbeitungswerkzeugs bestimmt wird, wobei in Schritt d) die Segmente bezüglich benachbarter Rasterpunkte mit dem gleichen Kontaktpunkt und gleicher Orientierung des Oberflächenbearbeitungswerkzeugs eingeteilt werden.

Bei einem Kontaktpunkt mit Randkontakt des Oberflächenbearbeitungswerkzeugs ist die Orientierung des Oberflächenbearbeitungswerkzeugs von Relevanz, da beim Randkontakt das Oberflächenbearbeitungswerkzeug leicht geneigt ist. Bei der Bewegung eines Oberflächenbearbeitungswerkzeugs ist somit die Kenntnis der Orientierung von Vorteil, um feststellen zu können, dass einerseits die Bewegung des Oberflächenbearbeitungswerkzeugs in dieser Position möglich ist und darüber hinaus sich das Oberflächenbearbeitungswerkzeug in die richtige Richtung bewegt, um eine gewünschte Qualität der Oberfläche des Werkstücks zu erreichen. Bei einem Mittelkontakt des Oberflächenbearbeitungswerkzeugs ist eine Orientierung nicht oder nur von geringer Relevanz.

Durch die Einteilung der Segmente nicht nur anhand der Art des Kontaktpunkts, sondern auch anhand der Orientierung des Oberflächenbearbeitungswerkzeugs kann sichergestellt werden, dass ein Segment in vorteilhafter Weise bearbeitet wird, ohne dass aufgrund des Wechsels des Kontaktpunkts oder der Orientierung es zu Einflüssen der zu bearbeitenden Oberfläche kommen kann.

Dabei kann vorgesehen sein, dass in Schritt c) bei der Bestimmung der Kontaktpunkte und Orientierung des Oberflächenbearbeitungswerkzeugs für die ausgewählten oder alle Rasterpunkte überprüft wird, ob an einem Rasterpunkt neben einem Kontaktpunkt des Oberflächenbearbeitungswerkzeugs eine weitere Kollision des Oberflächenbearbeitungswerkzeugs mit der Oberfläche des Werkstücks vorliegt und bei Feststellung einer weiteren Kollision der Kontaktpunkte und die Orientierung für den Rasterpunkt ausgeschlossen oder geändert werden. Die Bestimmung der Kontaktpunkte und Orientierung für die ausgewählten oder alle Rasterpunkte unter Berücksichtigung weiterer Kollisionen kann dabei iterativ erfolgen. Durch die Überprüfung, ob eine weitere Kollision zwischen Oberflächenbearbeitungswerkzeug und Werkstück vorliegt, kann sichergestellt werden, dass bei einer späteren Bearbeitung eines Segments ausschließlich eine Bearbeitung mittels des durch den Kontaktpunkt des Oberflächenbearbeitungswerkzeugs repräsentierten Bereichs des Oberflächenbearbeitungswerkzeugs bearbeitet wird und das Oberflächenbearbeitungswerkzeug nicht mit seiner Bearbeitungsfläche einen anderen Teil einer Oberfläche des Werkstücks ungewollt bearbeitet. Die Feststellung einer Kollision zwischen Oberflächenbearbeitungswerkzeug und Oberfläche des Werkstücks kann auf bekannte Art und Weise rechnerisch ermittelt werden.

Die weitere Kollision des Oberflächenbearbeitungswerkzeugs mit der Oberfläche des Werkstücks muss nicht notwendigerweise eine Kollision des Oberflächenbearbeitungswerkzeugs mit der zu bearbeitenden Oberfläche des Werkstücks sein, sondern es kann auch eine weitere Kollision mit einer nicht zu bearbeitende Oberfläche des Werkstücks vorliegen, wobei in diesem Fall in Schritten a) und b) nicht nur die zu bearbeitenden Oberfläche eines Werkstücks sondern auch ein darüber hinaus gehender Teil der Oberfläche eines Werkstücks analysiert wird und diesbezüglich ein Oberflächenraster erstellt wird. Das Oberflächenraster des über die zu bearbeitenden Oberfläche hinaus gehenden Teils der Oberfläche des Werkstücks kann ein separates Oberflächenraster sein oder Teil des in Schritt b) erstellten Oberflächenrasters. Das Oberflächenbearbeitungswerkzeug kann für die Kollisionsprüfung ebenfalls als Raster dargestellt werden.

Wenn über die zu bearbeitende Oberfläche des Werkstücks hinaus die Oberfläche des Werkstücks analysiert wird und ein Oberflächenraster dafür erstellt wird, werden in Schritt c) selbstverständlich nur die Rasterpunkte, die sich im Bereich der zu bearbeitenden Oberfläche des Werkstücks befinden, verarbeitet und nur für diese Rasterpunkte Kontaktpunkte des Oberflächenbearbeitungswerkzeuges bestimmt.

Bei der Bestimmung der Kontaktpunkte und Orientierung des Oberflächenbearbeitungswerkzeugs für die ausgewählten oder alle Rasterpunkte bei Wahl des Kontaktpunkts als Randkontakt des Oberflächenbearbeitungswerkzeugs kann ferner ein Neigungswinkel des Oberflächenbearbeitungswerkzeugs bestimmt werden. Der Neigungswinkel des Oberflächenbearbeitungswerkzeugs bei Randkontakt bestimmt die Wirkfläche zwischen Oberflächenbearbeitungswerkzeug und Oberfläche des Werkezugs. Über die Bestimmung des Neigungswinkels kann somit einerseits die Wirkfläche beeinflusst werden und andererseits auch bei Vorliegen einer weiteren Kollision eine Änderung vorgenommen werden, um eine weitere Kollision zu vermeiden.

Die Bestimmung des Neigungswinkels, beispielsweise bei einer weiteren Kollision, kann an einem Rasterpunkt iterativ erfolgen.

Auch kann vorgesehen sein, dass der Neigungswinkel optimiert wird. Die Optimierung kann auf eine möglichst große Wirkfläche zwischen Oberflächenbearbeitungswerkzeug und Oberfläche des Werkstücks hin erfolgen, sodass das Oberflächenbearbeitungswerkzeug stabil auf der Oberfläche des Werkstücks aufliegt.

Auch die Optimierung des Neigungswinkels kann iterativ erfolgen.

Vorzugsweise ist vorgesehen, dass in Schritt e) bei dem Planen von Bearbeitungspfaden des Oberflächenbearbeitungswerkzeugs in einem Segment eine Kontaktfläche des Oberflächenbearbeitungswerkzeugs mit der zu bearbeitenden Fläche des Werkstücks an Werkstückkontaktpunkten berechnet wird und die Bearbeitungspfade entlang bestimmter Werkstückkontaktpunkte geplant werden. Die Werkstückkontaktpunkte können dabei unabhängig von den in Schritt b) festgelegten Rasterpunkten sein. Bei der Planung der Bearbeitungspfade werden somit einzelne Punkte in dem Segment berechnet, die einen Bearbeitungspfad festlegen. Dafür kann vorgesehen sein, dass ein Segment mittels eines Koordinatensystems beschrieben wird und die Werkstückkontaktpunkte in einem festen Raster entlang beispielsweise der x-Achse vorgesehen sind. Die Positionen der Werkstückkontaktpunkte entlang der y-Achse können dann variabel vorgesehen sein. Die Festlegung der Werkstückkontaktpunkte kann ebenfalls iterativ erfolgen.

Dabei kann vorgesehen sein, dass Werkstückkontaktpunkte für einen ersten Bearbeitungspfad mittels berechneter Kontaktflächen und einer Grenze eines Segments bestimmt werden und Werkstückkontaktpunkte für einen zweiten Bearbeitungspfad mittels berechneter Kontaktflächen und einer durch den ersten Bearbeitungspfad berechneten Bearbeitungsgrenze bestimmt werden. Mit anderen Worten: Werkstückkontaktpunkte werden zunächst gewählt und für die Kontaktflächen des Oberflächenbearbeitungswerkzeugs mit der Werkstückoberfläche berechnet. Es wird dann überprüft, inwieweit für einen Werkstückkontaktpunkt die Kontaktfläche ausreichend Oberfläche überdeckt, wobei möglichst eine Grenze der Kontaktfläche mit der Grenze eines Segments übereinstimmen sollte. Anschließend werden die weiteren Werkstückkontaktpunkte berechnet und festgelegt, sodass ein erster Bearbeitungspfad entsteht, der das Segment möglichst genau entlang der Grenze des Segments bearbeitet. Die durch den ersten Bearbeitungspfad erfolgte bearbeitete Fläche bildet nun eine Grenze für den zweiten Bearbeitungspfad, sodass dieser mittels der berechneten Kontaktflächen entlang der Grenze der bearbeiteten Fläche geführt werden kann. Für die weiteren Bearbeitungspfade wird entsprechend vorgegangen.

Somit entstehen Bearbeitungspfade, die eine möglichst geringe Überschneidung von bearbeiteter Fläche und möglichst geringe Lücken aufweisen, sodass eine besonders vorteilhafte und effiziente Bearbeitung eines Segments möglich ist.

Die zuvor beschriebene und zumindest in den Ansprüchen 10 und 11 beschriebene Planung von Bearbeitungspfaden hat auch unabhängige erfinderische Bedeutung und kann auch unabhängig von der in den Schritten a) bis d) erfolgten Einteilung von Segmenten an anderen Flächen durchgeführt werden. Mit anderen Worten: Es kann eine Planung von Bearbeitungspfaden des Oberflächenbearbeitungswerkzeugs an einer auf andere Art und Weise festgelegte Fläche einer Oberfläche eines Werkstücks erfolgen, indem Werkstückkontaktpunkte und Kontaktflächen des Oberflächenbearbeitungswerkzeugs mit der zu bearbeitenden Oberfläche des Werkstücks berechnet werden.

Bei dem erfindungsgemäßen Verfahren oder den erfindungsgemäßen Verfahren kann ferner vorgesehen sein, dass für die Bearbeitung der Oberfläche des Segments oder der Fläche zumindest eine Sollkraft bestimmt wird, mit der das Oberflächenbearbeitungswerkzeug während des Führens entlang der Bearbeitungspfade gegen das Werkstück gedrückt wird. Dabei kann die Sollkraft derart bestimmt werden, dass während der Bearbeitung entlang eines Bearbeitungspfades ein konstanter Druck auf die zu bearbeitende Oberfläche erfolgt.

Die Sollkraft kann für jeden der Werkstückkontaktpunkte in Abhängigkeit der für den jeweiligen Werkstückkontaktpunkt berechneten Kontaktfläche berechnet werden.

Das Oberflächenbearbeitungswerkzeug kann beispielsweise robotergeführt bewegt werden. Aus den Bearbeitungspfaden und der Sollkraft kann eine Trajektorie resultieren, die am Roboter ausgeführt wird. Dabei kann eine hybride Impedanzregelung des Roboters verwendet werden. Diese bietet eine hohe Steifigkeit parallel zum aktuellen Werkstückkontaktpunkt und eine geringe Steifigkeit in Richtung der Oberflächennormalen, wobei eine vorteilhafte Bearbeitung des Werkstücks erfolgen kann.

Im Folgenden wird unter Bezugnahme auf die nachfolgenden Figuren das erfindungsgemäße Verfahren näher erläutert.
- In Fig. 1: ist schematisch ein Werkstück mit einem Oberflächenbearbeitungswerkzeug gezeigt,
- in Fig. 2: ist die parametrisierte Oberfläche des Werkstücks gezeigt,
- in Fign. 3a - 3c: sind die verschiedenen Kontaktpunkte des Oberflächenbearbeitungswerkzeugs und die Orientierung sowie Neigung schematisch dargestellt und
- in Fign. 4a und 4b: ist schematisch die Planung eines Bearbeitungspfads in einem Segment schematisch gezeigt.

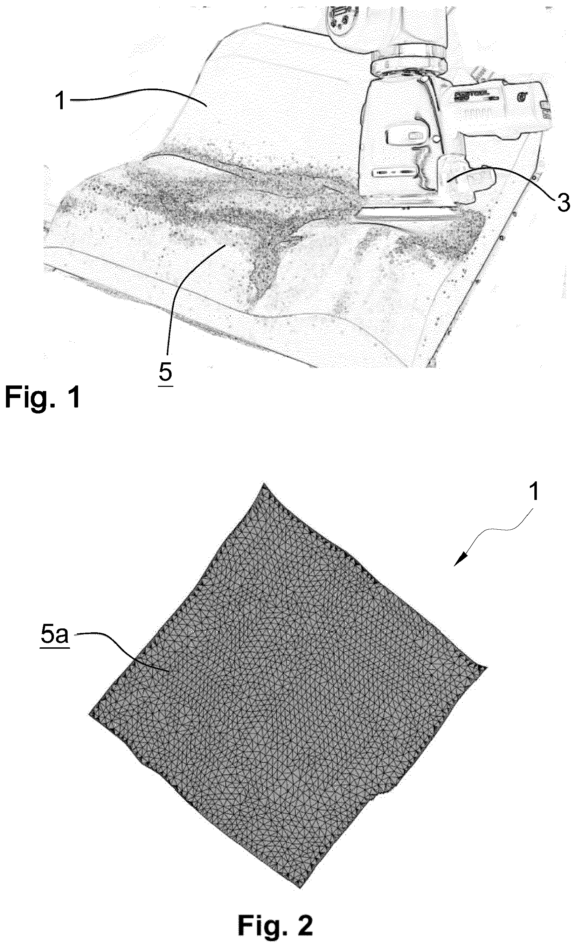

Mit dem erfindungsgemäßen Verfahren kann vorgesehen sein, dass eine Oberfläche eines Werkstücks 1 mit einem Oberflächenbearbeitungswerkzeug 3 automatisch bearbeitet wird. Dabei wird die zu bearbeitenden Oberfläche 5 des Werkstücks 1 analysiert und eine passende zweidimensionale Parametrisierung erstellt. Die parametrisierte Oberfläche 5a ist in Fig. 2 schematisch dargestellt. Anhand der parametrisierten Oberfläche 5a wird ein Oberflächenraster erstellt, das zumindest die zu bearbeitende Oberfläche 5 enthält. Das Oberflächenraster enthält mehrere Rasterpunkte.

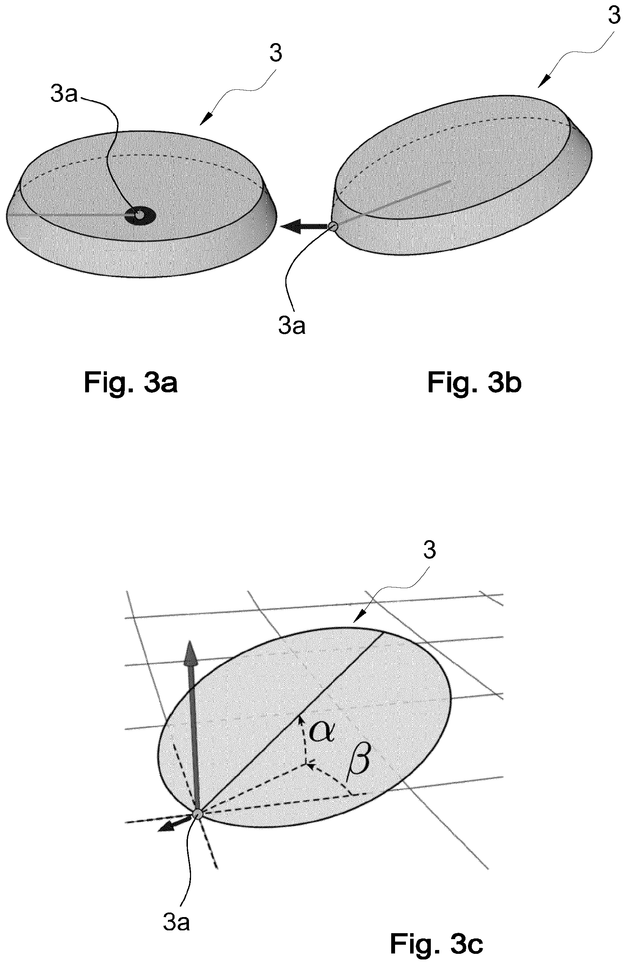

Für jeden Rasterpunkt oder ausgewählte Rasterpunkte wird nun ein Kontaktpunkt 3a des Oberflächenbearbeitungswerkzeugs 3 festgelegt. Dabei kann es sich um einen Mittelkontakt oder einen Randkontakt handeln. Die Unterschiede zwischen Mittel- und Randkontakt sind aus Fign. 3a und 3b ersichtlich, wobei in Fig. 3a der Mittelkontakt und in Fig.3b der Randkontakt dargestellt ist. Bei Festlegung eines Randkontakts wird ferner die Orientierung des Oberflächenbearbeitungswerkzeugs 3 sowie die Neigung für einen Rasterpunkt festgelegt. Neigung und Orientierung sind aus Fig. 3c durch die Winkel α und β ersichtlich. Ferner wird für einen ausgewählten Kontaktpunkt 3a überprüft, ob eine weitere Kollision des Oberflächenbearbeitungswerkzeugs 3 mit dem Werkstück 1 vorliegt. Bei Vorliegen einer weiteren Kollision kann der gewählte Kontaktpunkt 3a entweder ausgeschlossen werden oder geändert werden, indem beispielsweise die Orientierung und/oder Neigung geändert wird.

Anschließend wird die zu bearbeitenden Oberfläche in Segmente 7 eingeteilt, die benachbarte Rasterpunkte mit dem gleichen Kontaktpunkt 3a und der gleichen Orientierung des Oberflächenbearbeitungswerkzeugs 3 beinhalten. Bei einem Segment 7 kann grundsätzlich vorgesehen sein, dass die Neigung (Winkel α) des Oberflächenbearbeitungswerkzeugs 3 innerhalb eines Segmentes 7 unterschiedlich ist, sofern der Kontaktpunkt und die Orientierung in dem Segment 7 einheitlich sind.

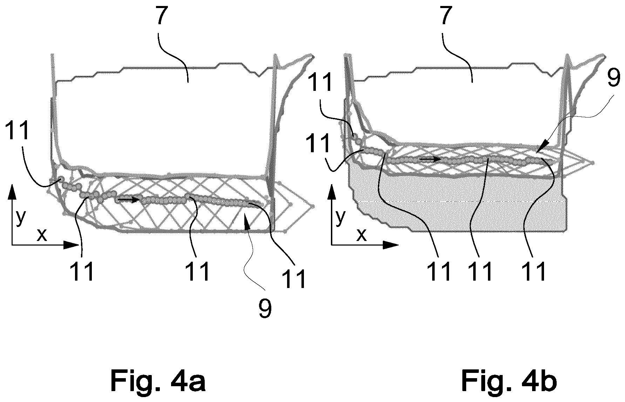

Für die einzelnen Segmente 7 werden anschließend Bearbeitungspfade 9 des Oberflächenbearbeitungswerkzeugs 3 geplant. Dabei werden für die einzelnen Segmente 7 anhand eines Koordinatensystems Werkstückkontaktpunkte 11 und an den Werkstückkontaktpunkten 11 vorliegenden Kontaktflächen des Oberflächenbearbeitungswerkzeugs 3 mit der zu bearbeitenden Oberfläche 5 berechnet. Die Werkstückkontaktpunkte 11 können beispielsweise entlang der x-Achse in einem vorgegebenen Raster festgelegt werden und in y-Richtung zur Optimierung verschoben werden. Ein erster Bearbeitungspfad 9 kann beispielsweise derart gelegt werden, dass sich die bearbeitete Fläche genau entlang der Grenze eines Segments 7 erstreckt, wie beispielsweise in Fig. 4a dargestellt ist.

Die weiteren Bearbeitungspfade 9 können dann stets entlang der Grenze einer bearbeiteten Fläche mittels der Werkstückkontaktpunkte 11 und der zugehörigen Kontaktfläche des Oberflächenbearbeitungswerkzeugs 3 gelegt werden. Dadurch ist eine vorteilhafte Bearbeitung der zu bearbeitenden Oberfläche 5 mit keinen oder nur geringen Überschneidungen oder Lücken möglich.

Für jeden Werkstückkontaktpunkt 11 kann eine Sollkraft berechnet werden, die über die Kontaktfläche einen gleichbleibenden Druck des Oberflächenbearbeitungswerkzeugs 3 auf die Oberfläche 5 des Werkstücks 1 hervorruft.

Das Oberflächenbearbeitungswerkzeug 3 kann mittels eines Roboters geführt werden, wobei die Bearbeitungspfade 9 des Oberflächenbearbeitungswerkzeugs 3 in dreidimensionale Positionen und Orientierungen des Oberflächenbearbeitungswerkzeugs 3 umgerechnet werden.

Das erfindungsgemäße Verfahren ermöglicht in vorteilhafter Weise die Oberflächenbearbeitung von Freiformgeometrien, wobei auch beispielsweise konkave Bereiche der Oberfläche in vorteilhafter Weise bearbeitet werden können.

## Patentansprüche

1. Verfahren zur automatisierten Oberflächenbearbeitung von Werkstücken (1) mit einem Oberflächenbearbeitungswerkzeug (3) mit den folgenden Schritten:
a) Analysieren zumindest einer zu bearbeitenden Oberfläche (5) eines Werkstücks (1)
b) Erstellung eines Oberflächenrasters zumindest der zu bearbeitenden Oberfläche (5), wobei das Oberflächenraster Rasterpunkte aufweist,
c) Bestimmen von jeweils einem Kontaktpunkt des Oberflächenbearbeitungswerkzeugs (3) für ausgewählte Rasterpunkte oder jeden Rasterpunkt, wobei die Kontaktpunkte des Oberflächenbearbeitungswerkzeugs (3) zumindest Mittelkontakt und Randkontakt des Oberflächenbearbeitungswerkzeugs (3) umfassen,
d) Einteilen der zu bearbeitenden Oberfläche (5) in Segmente (7), die benachbarte Rasterpunkt mit dem gleichen Kontaktpunkt des Oberflächenbearbeitungswerkzeugs (3) beinhalten,
e) Planen von Bearbeitungspfaden (9) des Oberflächenbearbeitungswerkzeugs (3) in einem Segment (7), und
f) Bearbeiten der Oberfläche des Segments (7) durch Führen des Oberflächenbearbeitungswerkzeugs (3) entlang der Bearbeitungspfade (9), wobei ein Kontakt des Oberflächenbearbeitungswerkzeugs (3) mit der zu bearbeitenden Oberfläche (5) mit dem dem Segment zugeordneten Kontaktpunkt des Oberflächenbearbeitungswerkzeugs (3) erfolgt.

2. Verfahren nach Anspruch 1, **dadurch gekennzeichnet, dass** in Schritt a) eine zwei-dimensionale Oberflächenparametrisierung zumindest der zu bearbeitenden Oberfläche erfolgt und in Schritt b) das Oberflächenraster anhand der zwei-dimensionalen Oberflächenparametrisierung erfolgt.

3. Verfahren nach Anspruch 2, **dadurch gekennzeichnet, dass** in Schritt e) die Bearbeitungspfade in dem Segment anhand der zwei-dimensionalen Oberflächenparametrisierung geplant werden und für die Bearbeitung der Oberfläche (5) in Schritt f) die Bearbeitungspfade (9) in dreidimensionale Positionen und Orientierungen des Oberflächenbearbeitungswerkzeugs (3) umgerechnet werden.

4. Verfahren nach einem der Ansprüche 1 bis 3, **dadurch gekennzeichnet, dass** in Schritt e) für jedes in Schritt d) erstelltes Segment (7) Bearbeitungspfade (9) des Oberflächenbearbeitungswerkzeugs (3) geplant werden und in Schritt f) die Oberfläche jedes Segments (7) durch Abfahren der Bearbeitungspfade (9) mit dem Oberflächenbearbeitungswerkzeug (3) bearbeitet wird.

5. Verfahren nach einem der Ansprüche 1 bis 4, **dadurch gekennzeichnet, dass** in Schritt c) bei der Bestimmung von Rasterpunkten als Kontaktpunkte mit Randkontakt des Oberflächenbearbeitungswerkzeugs (3) zusätzlich eine Orientierung des Oberflächenbearbeitungswerkzeugs (3) bestimmt wird, wobei in Schritt d) die Segmente (7) bezüglich benachbarter Rasterpunkte mit dem gleichen Kontaktpunkt und gleicher Orientierung des Oberflächenbearbeitungswerkzeugs (3) eingeteilt werden.

6. Verfahren nach Anspruch 5, **dadurch gekennzeichnet, dass** in Schritt c) bei der Bestimmung der Kontaktpunkte und Orientierung des Oberflächenbearbeitungswerkzeugs (3) für die ausgewählten oder alle Rasterpunkte überprüft wird, ob an einem Rasterpunkt neben einem Kontaktpunkt des Oberflächenbearbeitungswerkzeugs (3) eine weitere Kollision des Oberflächenbearbeitungswerkzeugs (3) mit der Oberfläche des Werkstücks vorliegt und bei Feststellung einer weiteren Kollision der Kontaktpunkt und die Orientierung für den Rasterpunkt ausgeschlossen oder geändert werden.

7. Verfahren nach Anspruch 6, **dadurch gekennzeichnet, dass** in Schritt c) bei der Bestimmung der Kontaktpunkte und Orientierung des Oberflächenbearbeitungswerkzeugs (3) für die ausgewählten oder alle Rasterpunkte bei Wahl des Kontaktpunkts als Randkontakt des Oberflächenbearbeitungswerkzeugs (3) ferner ein Neigungswinkel des Oberflächenbearbeitungswerkzeugs (3) bestimmt wird.

8. Verfahren nach Anspruch 7, **dadurch gekennzeichnet, dass** bei Feststellung einer weiteren Kollision an dem Rasterpunkt der Neigungswinkel für den Kontaktpunkt geändert wird.

9. Verfahren nach einem der Ansprüche 7 oder 8, **gekennzeichnet durch** bei der Bestimmung eines Kontaktpunktes als Randkontakt der Neigungswinkel optimiert wird.

10. Verfahren nach einem der Ansprüche 1 bis 9, **dadurch gekennzeichnet, dass** in Schritt e) bei dem Planen von Bearbeitungspfaden (9) des Oberflächenbearbeitungswerkzeugs (3) in einem Segment (7) eine Kontaktfläche des Oberflächenbearbeitungswerkzeugs (3) mit der zu bearbeitenden Oberfläche (5) des Werkstücks (1) an Werkstückkontaktpunkten (11) berechnet wird und die Bearbeitungspfade entlang bestimmter Werkstückkontaktpunkte (11) geplant werden.

11. Verfahren nach Anspruch 10, **dadurch gekennzeichnet, dass** Werkstückkontaktpunkte (11) für einen ersten Bearbeitungspfad (9) mittels berechneter Kontaktflächen und einer Grenze eines Segments (7) bestimmt werden und Werkstückkontaktpunkte (11) für einen zweiten Bearbeitungspfad (9) mittels berechneter Kontaktflächen und einer durch den ersten Bearbeitungspfad (9) berechneten Bearbeitungsgrenze bestimmt werden.

12. Verfahren nach einem der Ansprüche 1 bis 11, **dadurch gekennzeichnet, dass** für die in Schritt f) erfolgende Bearbeitung der Oberfläche des Segments (7) zumindest eine Sollkraft bestimmt wird, mit der das Oberflächenbearbeitungswerkzeug (3) während des Führens entlang der Bearbeitungspfade (9) gegen das Werkstück (1) gedrückt wird.

13. Verfahren nach einem der vorangegangenen Ansprüche, **dadurch gekennzeichnet, dass** für jeden der Werkstückkontaktpunkte (11) eine Sollkraft in Abhängigkeit der für den jeweiligen Werkstückkontaktpunkt (11) berechneten Kontaktfläche berechnet wird.
